# EUROPÄISCHE PATENTSCHRIFT

(11) **EP 3 036 151 B1**
(45) Veröffentlichungstag und Bekanntmachung des Hinweises auf die Patenterteilung: **26.02.2020**
(21) Anmeldenummer: 14736405.3
(22) Anmeldetag: 08.07.2014
(51) Int. Cl.: B62M 6/55, F16H 15/00

(54) **FAHRZEUG MIT ELEKTRISCHEM HILFSANTRIEB UND STUFENLOS VERSTELLBAREM PLANETENGETRIEBE**
VEHICLE WITH ELECTRIC AUXILIARY DRIVE AND CONTINUOUSLY VARIABLE PLANETARY GEAR UNIT
VÉHICULE COMPORTANT UN ENTRAÎNEMENT D'ASSISTANCE ÉLECTRIQUE ET UNE TRANSMISSION À TRAINS ÉPICYCLOÏDAUX À VARIATION CONTINUE

(30) Priorität: 23.08.2013 DE 102013216750; 08.10.2013 DE 102013220299
(43) Veröffentlichungstag der Anmeldung: 29.06.2016
(73) Patentinhaber: Robert Bosch GmbH, 70442 Stuttgart (DE)
(72) Erfinder: HINTERKAUSEN, Markus, 71701 Schwieberdingen (DE); KUEHLCKE, Torsten, 72622 Nuertingen (DE); KIMMICH, Peter, 71144 Steinenbronn (DE); HILZINGER, Juergen, 71272 Renningen (DE); MEYER, Andre, 71686 Remseck (DE)
(86) Internationale Anmeldenummer: PCT/EP2014/064609
(87) Internationale Veröffentlichungsnummer: WO 2015/024701

(56) Entgegenhaltungen:
- WO-A1-2006/035215
- WO-A1-2010/001362
- WO-A1-2012/030213
- CN-Y- 201 179 951
- DE-A1-102009 046 867
- DE-A1-102012 109 637
- US-A- 5 167 591
- US-B2- 8 393 989

## Beschreibung

### Stand der Technik

Die vorliegende Erfindung betrifft ein Fahrzeug mit elektrischem Hilfsantrieb, welches mit Motorkraft und/oder Pedalkraft antreibbar ist, insbesondere ein Elektrofahrrad, mit einem stufenlos verstellbaren Planetengetriebe.

Mit Motorkraft und/oder Pedalkraft antreibbare Fahrzeuge sind beispielsweise als Elektrofahrräder, z.B. als Pedelecs, bekannt. Hierbei gibt es Elektrofahrräder, bei denen der elektrische Antrieb im Bereich des Tretlagers (Mittelmotorkonzept) angeordnet ist. Über eine Kette wird dann ein Hinterrad angetrieben. Hierbei kann am Hinterrad eine Schalteinrichtung, wie z.B. eine Kettenschaltung oder eine Nabenschaltung oder dergleichen, angeordnet sein. Bekannt ist ebenfalls eine stufenlose Nabenschaltung am Hinterrad, wie beispielhaft in der US 2012/0309579 A1 beschrieben wird. Weiterhin ist aus der DE 102012109637 A1 ein Fahrzeug gemäß dem Oberbegriff des Anspruchs 1 bekannt.

Die häufigsten am Hinterrad angeordneten Schalteinrichtungen weisen dabei jeweils Sprünge zwischen den einzelnen Schaltstufen auf. Eine am Fahrrad, insbesondere einem Elektrofahrrad, befindliche Schalteinrichtung kann automatisch gesteuert sein. Beide Systeme, die am Hinterrad angeordnete Schalteinrichtung und der elektrische Antrieb mit Motorunterstützung und Fahrerwunschsensierung, arbeiten hintereinander und sind insbesondere bei automatisch geregelten Schalteinrichtungen sowie bei Sprüngen zwischen den Schaltstufen nicht optimal aufeinander abgestimmt. Das hohe Gewicht insbesondere der Nabenschaltungen am Hinterrad stellt für das Handling, Federung und Fahrdynamik keine optimale Gewichtsverteilung dar. Zudem ist eine Demontage und Montage des Hinterrads mit Schalteinrichtung oft sehr aufwendig und kostenintensiv.

Die Schrift DE 10 2012 109 637 A1 offenbart eine Fahrradantriebseinheit aufweisend einen Motor mit einem Loch, in welchem eine Kurbelachse angeordnet werden kann. Die Fahrradantriebseinheit umfasst ferner einen Übertragungsmechanismus mit einer Mehrzahl von auswählbaren Übersetzungsverhältnissen und ein Abtriebsteil, das ausgebildet ist, einen Abtrieb des Übertragungsmechanismus und einen Abtrieb des Motors zu addieren.

Das Dokument DE 10 2009 046 867 A1 offenbart ein Fahrrad, umfassend einen Kurbeltrieb, einen Elektromotor und eine Antriebswelle, wobei die Antriebswelle über ein Kegelgetriebe mit einem Hinterrad verbunden ist.

Das Dokument WO 2010/001362 A1 offenbart ein Fahrrad, wobei ein stufenloses Getriebe in einer Nabe des Hinterrads angeordnet ist.

### Offenbarung der Erfindung

Das erfindungsgemäße mit Motorkraft und/oder Pedalkraft antreibbare Fahrzeug, insbesondere Elektrofahrrad, mit den Merkmalen des Anspruchs 1, weist dem gegenüber den Vorteil auf, dass die Integration einer stufenlos verstellbaren gemeinsamen Gehäuse, möglich ist. Hierdurch kann insbesondere eine optimale Abstimmung zwischen dem elektrischen Antrieb und der Schalteinrichtung erreicht werden. Weiterhin kann erfindungsgemäß auf eine separate Schalteinrichtung am Hinterrad des Fahrzeugs verzichtet werden. Die erfindungsgemäße Idee vereinigt dabei den elektrischen Antrieb mit Reduktionsgetriebe für die Untersetzung der Drehzahl des Motors und ein Planetengetriebe mit stufenlos verstellbarer Übersetzung im Bereich des Kurbeltriebs des Fahrzeugs. Somit wird ein besonders kompakter und leichtbauender Aufbau erreicht. Insbesondere können verschiedene Bauteile durch den elektrischen Antrieb und die Schalteinrichtung gemeinsam verwendet werden, so dass eine Teilezahl reduziert werden kann. Insbesondere bei einem Elektrofahrrad wird hierdurch ein tiefer, zentraler Schwerpunkt und ein leichteres Hinterrad für eine verbesserte Handhabung, Federung und eine verbesserte Fahrdynamik erreicht. Ferner kann auf einfache Weise das Hinterrad demontiert und montiert werden. Dies wird erfindungsgemäß dadurch erreicht, dass ein stufenlos verstellbares Planetengetriebe verwendet wird. Erfindungsgemäß wird unter einem stufenlos verstellbaren Planetengetriebe ein Getriebe verstanden, bei dem eine Eingangsscheibe, eine Ausgangsscheibe sowie rotierende und neigbare Kugeln vorhanden sind. Ferner ist ein axial bewegliches, zentrales Stellorgan vorhanden, welches eine Achse der Kugeln um einen Kugelmittelpunkt schwenken kann. Dadurch verändern sich die für die Übersetzung relevanten Durchmesser zwischen den Kugeln und Eingangsscheibe bzw. Ausgangsscheibe. Dadurch kann eine Übersetzung und/oder Untersetzung in stufenloser Weise bereitgestellt werden. Ein Übergang zwischen den relevanten Durchmessern der Kugeln erfolgt hierbei kontinuierlich über die Kugeloberfläche. Die Verstellung der Kugelachse erfolgt vorzugsweise mittels eines Stellantriebs. Die vorliegende Erfindung ermöglicht nun die Integration eines derartigen stufenlos verstellbaren Planetengetriebes mit einem elektrischen Antrieb und mit einem Reduktionsgetriebe im Bereich eines Kurbeltriebs des Fahrzeugs. Hierdurch wird eine besonders kompakte Bauweise erhalten, insbesondere kann auf eine separate Schalteinrichtung am Hinterrad des Fahrzeugs verzichtet werden. Erfindungsgemäß ist ferner ein Eingangselement des stufenlos verstellbaren Planetengetriebes mit dem Kurbeltrieb und dem elektrischen Antrieb verbunden ist, wobei ein durch einen Fahrer aufgebrachtes Pedalantriebsmoment und ein durch den elektrischen Antrieb aufgebrachtes elektrisches Antriebsdrehmoment über das gleiche Eingangselement des stufenlos verstellbaren Planetengetriebes eingebracht werden, so dass die Summation der beiden Drehmomente vor dem stufenlos verstellbaren Planetengetriebe erfolgt.

Die Unteransprüche zeigen bevorzugte Weiterbildungen der Erfindung.

Weiter wird erfindungsgemäß ein durch einen Fahrer aufgebrachtes Pedalantriebsmoment und ein durch den elektrischen Antrieb aufgebrachtes elektrisches Antriebsdrehmoment über das gleiche Eingangselement des stufenlos verstellbaren Planetengetriebes eingebracht. Damit erfolgt die Summation der beiden Drehmomente vor dem stufenlos verstellbaren Planetengetriebe, da ein Reduktionsgetriebe für die Untersetzung der Drehzahl des Motors vorteilhaft eine feste, auf die Fahrertrittfrequenz abgestimmte Übersetzung aufweist. Ein weiterer Vorteil ist, dass sowohl bei ausschließlich vorhandenem Pedalantriebsmoment oder bei ausschließlich vorhandenem elektrischem Antriebsdrehmoment eine stufenlose Übersetzungsänderung möglich ist.

Das stufenlos verstellbare Planetengetriebe kann konzentrisch um die Kurbelwelle oder mit seiner Mittelachse parallel zur Kurbelachse angeordnet werden. Eine konzentrische Anordnung bedeutet einen besonders kompakten Aufbau. Eine parallel zur Kurbelwelle verlaufende Anordnung hingegen hat den besonderen Vorteil eines modularen Aufbaus des Kurbeltriebs, bei dem nach einem Baukastensystem kostengünstig und einfach ein konventioneller Kurbeltrieb ohne integrierte Schaltung auf ein System mit integriertem stufenlos verstellbaren Planetengetriebe erweitert werden kann.

Weiter bevorzugt weist das stufenlos verstellbare Planetengetriebe ein Eingangselement auf, an welchem ein Getriebe, insbesondere ein Stirnradgetriebe oder ein zweites Planetengetriebe oder ein Schneckengetriebe vorgeschaltet ist. Das zweite Planetengetriebe kann dabei ebenso ein stufenlos verstellbares Planetengetriebe sein als auch ein konventionelles Planetengetriebe, in Stufen schaltbar oder mit einer festen Übersetzung, mit Sonnenrad, Planeten, Planetenradträger und Hohlrad, die als Zahnräder ausgebildet sind. Das vorgeschaltete Getriebe ist zusätzlich mit dem Reduktionsgetriebe des elektrischen Antriebs und/oder dem Kurbeltrieb verbunden. Dabei werden bevorzugt Zahnräder gemeinsam verwendet. Im Weiteren bevorzugt weist das stufenlos verstellbare Planetengetriebe zusätzlich ein Ausgangselement auf, an welchem ein weiteres Getriebe, insbesondere ein Stirnradgetriebe oder ein Planetengetriebe nachgeschaltet ist. Das nachgeschaltete Planetengetriebe kann dabei auch ein stufenlos verstellbares Planetengetriebe sein als auch ein konventionelles Planetengetriebe, in Stufen schaltbar oder mit fester Übersetzung, mit Sonnenrad, Planeten, Planetenradträger und Hohlrad, die als Zahnräder ausgebildet sind.

Für eine besonders kompakte und insbesondere im Bereich des Kurbeltriebs mögliche Anordnung mit hoher Bodenfreiheit sind vorzugsweise der elektrische Antrieb und das stufenlos verstellbare Planetengetriebe auf einer gemeinsamen Seite der Tretlagerwelle, insbesondere oberhalb der Tretlagerwelle, angeordnet. Für eine besonders kompakte Anordnung, bei der vorzugsweise der gesamte Antrieb mit Motor, Reduktionsgetriebe und stufenlos verstellbarem Planetengetriebe in der Sichtbarkeit möglichst von einem Kettenblatt verdeckt wird, sind sowohl das stufenlos verstellbare Planetengetriebe als auch ein vorgelagertes und/oder nachgelagertes weiteres Getriebe konzentrisch um die Tretlagerwelle angeordnet.

Weiter bevorzugt ist der elektrische Antrieb innerhalb des stufenlos verstellbaren Planetengetriebes angeordnet. Alternativ ist der elektrische Antrieb außerhalb des stufenlos verstellbaren Planetengetriebes, insbesondere oberhalb des stufenlos verstellbaren Planetengetriebes angeordnet. Hierdurch kann ebenfalls eine höhere Bodenfreiheit im Bereich des Kurbeltriebs erreicht werden.

Gemäß einer weiteren bevorzugten Ausgestaltung der vorliegenden Erfindung fallen eine Tretlagerwelle des Kurbeltriebs und eine Mittelachse des Abtriebselements, z.B. eine Mittelachse des Kettenblatts, auseinander. Hierdurch ist es möglich, dass die Tretlagerwelle als tiefstes Bauelement angeordnet wird und der elektrische Antrieb sowie das stufenlos verstellbare Planetengetriebe oberhalb der Tretlagerwelle angeordnet werden und somit auch eine Mittelachse des Kettenblatts oberhalb der Tretlagerwelle angeordnet werden kann.

Eine weitere bevorzugte integrierte Anordnung wird dadurch erreicht, dass der elektrische Antrieb in koaxialer Anordnung zur Mittelachse des Kettenblatts und zur Mittelachse des stufenlos verstellbaren Planetengetriebes mit einem zweiten Zahnradplanetengetriebe verbunden ist, wobei ein Abtrieb des zweiten Planetengetriebes mit dem Sonnenrad des stufenlos verstellbaren Planetengetriebes verbunden ist. Vorzugsweise ist das Sonnenrad des stufenlos verstellbaren Planetengetriebes als Hohlrad für das zweite innenliegende Planetengetriebe ausgeführt. Somit erfolgt die Zufuhr des Antriebsdrehmoments des elektrischen Motors z.B. in das Sonnenrad des stufenlos verstellbaren Planetengetriebes und damit die Summation von Motor- und Fahrermoment innerhalb des stufenlos verstellbaren Planetengetriebes. Hierdurch kann eine Kompaktheit des Antriebs weiter verbessert werden.

Um sicherzustellen, dass das stufenlos verstellbare Planetengetriebe auch bei ausschließlichem Muskelbetrieb verwendet werden kann, ist vorzugsweise das Abtriebselement, z.B. das Kettenblatt, auf einer Hohlwelle angeordnet.

In einer bevorzugten Ausführung ist der Kurbeltrieb über einen Freilauf an ein Eingangselement des stufenlos verstellbaren Planetengetriebes gekoppelt. Das Abtriebselement, z.B. das Kettenblatt, ist frei drehbar um die Kurbelwelle gelagert. Damit ist der Kurbeltrieb im Antriebsfall immer über das stufenlos verstellbare Planetengetriebe mit dem Abtriebselement verbunden. Beim Rückwärtspedalieren entkoppelt der Freilauf den Kurbeltrieb vom Antriebsstrang, insbesondere kann keine Bremswirkung durch den Motor entstehen bzw. der Motor ist vor einer plötzlichen Drehrichtungsumkehr geschützt.

Eine weitere bevorzugte Ausgestaltung der Erfindung ist die Anordnung des Abtriebselements, z.B. des Kettenblatts, auf der Seite des Eingangselements des stufenlos verstellbaren Planetengetriebes. An- und Abtrieb befinden sich nun auf derselben Seite des stufenlos verstellbaren Planetengetriebes und es wird damit ein Anflanschen an bestehende Strukturen begünstigt. Insbesondere in dieser Anordnung kann die Anbindung des Ausgangselements des stufenlos verstellbaren Planetengetriebes an das Abtriebselement, z.B. das Kettenblatt, auch über einen nicht erfindungsgemäßen Riementrieb erfolgen.

Eine Verstellung des stufenlos verstellbaren Planetengetriebes wird vorzugsweise mittels eines Stellantriebs vorgenommen. Hierdurch kann das stufenlos verstellbare Planetengetriebe die Funktion einer automatischen oder automatisierbaren Fahrradschaltung übernehmen. Weiter bevorzugt ist das Reduktionsgetriebe des elektrischen Antriebs ein Stirnradgetriebe oder ein zahnradbasiertes Planetengetriebe oder ein Schneckengetriebe. Ferner bevorzugt ist ein zusätzliches Getriebe zwischen dem Reduktionsgetriebe des Antriebs und dem stufenlos verstellbaren Planetengetriebe angeordnet. Besonders bevorzugt weisen dabei das Reduktionsgetriebe und das zusätzliche vorgeschaltete Getriebe gemeinsame Teile, beispielsweise ein gemeinsames Zahnrad, auf. Gemäß einer weiteren bevorzugten Ausgestaltung der Erfindung ist am Ausgangselement des stufenlos verstellbaren Planetengetriebes ein weiteres nachgeschaltetes Getriebe vor dem Abtriebselement (Kettenblatt) vorgesehen. Vorzugsweise sind das vorgeschaltete und/oder nachgeschaltete Getriebe als Riementrieb ausgebildet.

Die erfindungsgemäße Idee wird besonders bevorzugt in Verbindung mit einem Elektrofahrrad mit Mittelmotorantrieb verwendet. Hierbei ist der elektrische Antrieb im Bereich des Kurbeltriebs angeordnet und es ist möglich, dass beispielsweise einem Fahrradhersteller eine komplette Baueinheit, umfassend den elektrischen Antrieb sowie das stufenlose Getriebe als Automatik-Schalteinrichtung, bereitgestellt werden kann. In einer solchen Baueinheit können der elektrische Antrieb und das stufenlose Getriebe optimal aufeinander abgestimmt werden.

### Zeichnung

Nachfolgend werden bevorzugte Ausführungsbeispiele der Erfindung unter Bezugnahme auf die begleitende Zeichnung im Detail beschrieben. In der Zeichnung werden gleiche bzw. funktional gleiche Teile mit den gleichen Bezugszeichen bezeichnet. In der Zeichnung ist:
- Figur 1: eine schematische Darstellung eines Elektrofahrrads gemäß einem ersten Ausführungsbeispiel der Erfindung,
- Figur 2: eine schematische Darstellung einer erfindungsgemäßen Antriebseinheit gemäß dem ersten Ausführungsbeispiel mit elektrischem Antrieb und stufenlos verstellbarem Planetengetriebe,
- Figur 3: eine schematische Ansicht einer Antriebseinheit gemäß einem zweiten Ausführungsbeispiel der Erfindung,
- Figur 4: eine schematische Ansicht einer Antriebseinheit gemäß einem dritten Ausführungsbeispiel der vorliegenden Erfindung,
- Figur 5: eine schematische Ansicht einer Antriebseinheit gemäß einem vierten Ausführungsbeispiel der vorliegenden Erfindung,
- Figur 6: eine schematische Ansicht einer Antriebseinheit gemäß einem fünften Ausführungsbeispiel der vorliegenden Erfindung,
- Figur 7: eine schematische Ansicht einer Antriebseinheit gemäß einem sechsten Ausführungsbeispiel der vorliegenden Erfindung,
- Figur 8: eine schematische Ansicht einer Antriebseinheit gemäß einem siebten Ausführungsbeispiel der vorliegenden Erfindung,
- Figur 9: eine schematische Ansicht einer Antriebseinheit gemäß einem achten Ausführungsbeispiel der vorliegenden Erfindung,
- Figur 10: eine schematische Ansicht einer Antriebseinheit gemäß einem neunten Ausführungsbeispiel der vorliegenden Erfindung, und
- Figur 11: eine schematische Ansicht einer Antriebseinheit gemäß einem zehnten Ausführungsbeispiel der vorliegenden Erfindung.

### Bevorzugte Ausführungsformen der Erfindung

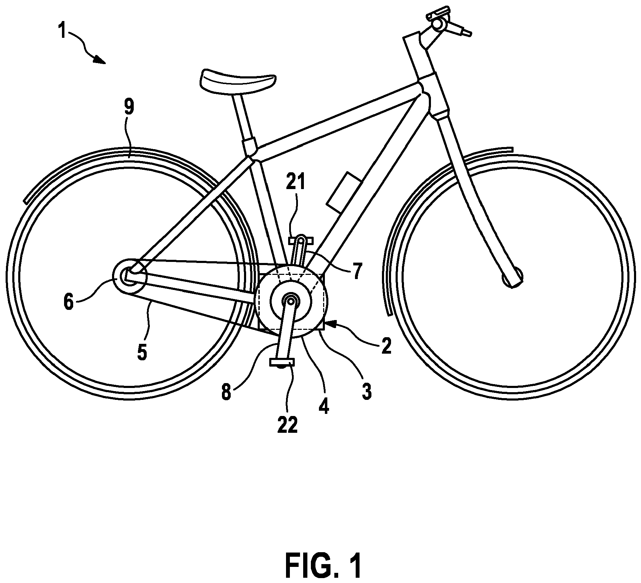

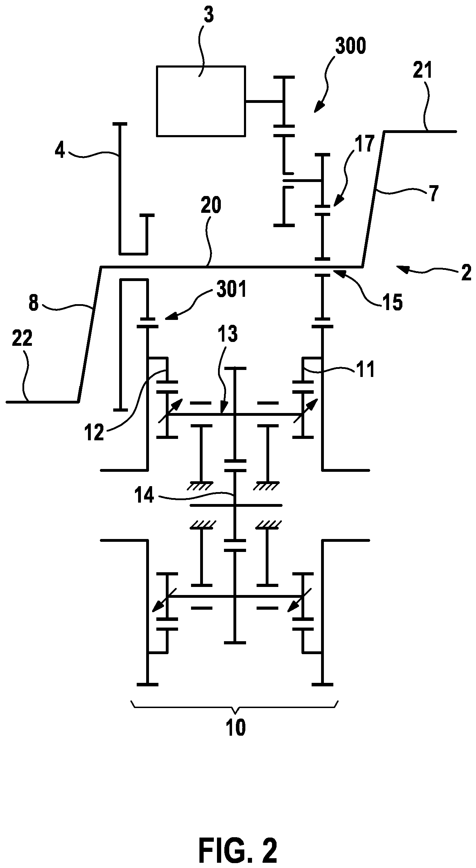

Nachfolgend wird unter Bezugnahme auf die Figuren 1 und 2 ein Elektrofahrrad 1 gemäß einem ersten bevorzugten Ausführungsbeispiel der Erfindung im Detail beschrieben.

Wie aus Figur 1 ersichtlich ist, umfasst das Elektrofahrrad 1 einen Kurbeltrieb 2 mit zwei Kurbeln 7, 8 und zwei Pedalen 21, 22. Das Bezugszeichen 20 bezeichnet eine Kurbelwelle (vergleiche Figur 2). Ein elektrischer Antrieb 3 ist in den Kurbeltrieb 2 integriert. An einem Hinterrad 9 ist ein Ritzel 6 angeordnet.

Ein Antriebsdrehmoment wird von einem Kettenblatt 4 über eine Kette 5 auf das Ritzel 6 übertragen.

Die Antriebseinheit ist im Detail in Figur 2 dargestellt. Dem Kettenblatt 4 kann dabei sowohl ein vom elektrischen Antrieb 3 bereitgestelltes Antriebsdrehmoment, als auch ein Pedaldrehmoment zugeführt werden.

Wie aus Figur 2 ersichtlich ist, ist zwischen dem Kettenblatt 4 und der Kurbelwelle 20 ein stufenlos verstellbares Planetengetriebe 10 angeordnet. Die Verbindung zwischen Kurbelwelle 20 und dem stufenlos verstellbaren Planetengetriebe 10 erfolgt über einen ersten Freilauf 15, der beim Vorwärtspedalieren dafür sorgt, dass das stufenlos verstellbare Planetengetriebe mitgenommen wird und beim Rückwärtspedalieren kein Drehmoment auf das Kettenblatt 4 übertragen wird. Einem Eingangselement 11 des stufenlos verstellbaren Planetengetriebes 10 ist ein Stirnradgetriebe 17 vorgeschaltet, welches die Verbindung zur Kurbelwelle 20 und einem Reduktionsgetriebe 300 des elektrischen Antriebs 3 herstellt. Dabei ist das an der Kurbelwelle 20 angebrachte Stirnrad des dem Eingangselement 11 vorgeschalteten Getriebes zugleich auch Bestandteil des Reduktionsgetriebes des elektrischen Antriebs 3. Ein weiteres Stirnradgetriebe 301 ist dem Ausgangselement 12 des stufenlos verstellbaren Planetengetriebes 10 nachgeschaltet und stellt die Verbindung zum Kettenblatt 4 her.

Das stufenlos verstellbare Planetengetriebe ist eine stufenlos verstellbare Stelleinrichtung mit dem Eingangselement 11, dem Ausgangselement 12, einer Vielzahl von rotierenden und neigbaren Kugeln 13 sowie einem zentralen Stellorgan 14, welches zudem als Abrollfläche für die Kugeln dient. Durch das Neigen der Kugeln 13 kann eine Übersetzung zwischen der Antriebsseite und der Abtriebsseite (Kettenblatt) erreicht werden. Somit ist ein stufenloses Gangschalten für das Elektrofahrrad 1 möglich, so dass eine Gangschaltung am Hinterrad des Fahrrads entfallen kann.

Ein Traktionsfluid ist zwischen dem Eingangselement 11 und dem Ausgangselement 12 und insbesondere im Kontaktbereich zwischen den Kugeln 13 und dem Eingangselement 11 und Ausgangselement 12 angeordnet, um die Drehmomentübertragung zu ermöglichen.

Der elektrische Antrieb 3 und das stufenlos verstellbare Planetengetriebe 10 können aufgrund der Verbindung über Stirnradstufen in nahezu beliebigen Winkeln, z.B. um 180°, an der Kurbelwelle 20 einander gegenüber angeordnet werden. Der Winkelbereich ist limitiert durch die Abmessungen der einzelnen Komponenten und die maximal zu erzielende Bodenfreiheit. Des Weiteren begünstigt die Anbindung über zwei Stirnradstufen einen modularen Aufbau, bei dem das stufenlos verstellbare Planetengetriebe 10 in einfacher Weise nach einem Baukastensystem einem konventionellen Aufbau ohne integrierte Schaltung hinzugefügt werden kann.

Erfindungsgemäß ist somit eine stufenlos verstellbare Gangschaltung und der elektrische Antrieb 3 mit Reduktionsgetriebe am Kurbeltrieb 2 integriert. Vorzugsweise ist hierbei ein gemeinsames Gehäuse für Kurbeltrieb 2, elektrischen Antrieb 3 mit Reduktionsgetriebe und stufenlos verstellbares Planetengetriebe 10 vorgesehen. Hierdurch kann eine vormontierbare, kompakte Einheit bereitgestellt werden, welche einfach an bestehende Fahrradrahmen angebracht werden kann.

In Figur 2 ist das stufenlos verstellbare Planetengetriebe 10 schematisch dargestellt. Die verschiedenen Positionen jeder Kugel 13 sind als drei Zahnräder mit variablem Durchmesser für die beiden äußeren Zahnräder, jeweils durch den die Verstellbarkeit signalisierenden Pfeil angedeutet. Die Kugeln sind dabei in einem Käfig gehalten, welcher im Wesentlichen dem Planetenradträger eines üblichen Planetenradgetriebes entspricht. Das zentrale Stellorgan 14 kann mittels eines nicht gezeigten Aktuators in Axialrichtung verstellt werden und entspricht dem Sonnenrad eines üblichen Planetengetriebes.

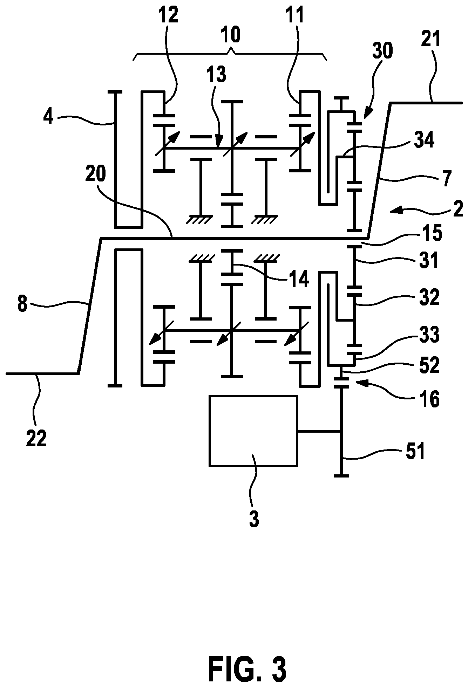

Figur 3 zeigt einen Kurbeltrieb 2 für ein Elektrofahrrad gemäß einem zweiten Ausführungsbeispiel der Erfindung. Der Kurbeltrieb 2 des zweiten Ausführungsbeispiels entspricht im Wesentlichen dem des ersten Ausführungsbeispiels, wobei zusätzlich noch ein konventionelles (zahnradbasiertes) Planetengetriebe 30 mit einem Sonnenrad 31, Planeten 32 und einem Hohlrad 33 vorgesehen ist. Der elektrische Antrieb 3 ist über eine erste Stirnradverzahnung 16 mit Zahnrädern 51, 52 mit dem Hohlrad 33 des Planetengetriebes 30 verbunden. Das Eingangselement 11 ist mit einem Planetenradträger 34 des Planetengetriebes 30 verbunden. Das Sonnenrad 31 ist über einen Freilauf auf der Kurbelwelle 20 angeordnet. Somit kann ein durch Pedalieren erzeugtes Antriebsdrehmoment über das Sonnenrad 31 in das konventionelle Planetengetriebe 30 eingebracht und von dort über das stufenlos verstellbare Planetengetriebe 10 zum Kettenblatt 4 übertragen werden. Ein vom elektrischen Antrieb 3 aufgebrachtes Antriebsdrehmoment wird über das Hohlrad 33 in das Planetengetriebe 30 eingebracht und von dort über das stufenlos verstellbare Planetengetriebe 10 zum Kettenblatt 4 übertragen. Beim zweiten Ausführungsbeispiel ist das stufenlos verstellbare Planetengetriebe 10 konzentrisch um die Kurbelwelle 20 angeordnet. Hierdurch kann insbesondere in radialer Richtung ein besonders kompakter Aufbau realisiert werden. Ferner kann durch die Verwendung des Planetengetriebes 30, insbesondere in einer nicht gezeigten schaltbaren Ausführung, eine größere Spreizung der variablen Übersetzung insgesamt erhalten werden.

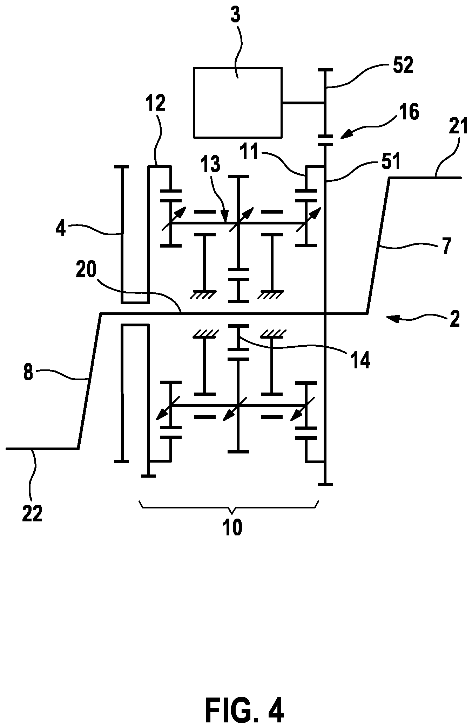

Figur 4 zeigt eine Antriebseinheit eines Elektrofahrrads gemäß einem dritten Ausführungsbeispiel der Erfindung. Wie aus Figur 4 ersichtlich ist, ist das stufenlos verstellbare Planetengetriebe 10 wieder konzentrisch um die Kurbelwelle 20 herum angeordnet. Der elektrische Antrieb 3 ist dabei außerhalb des stufenlos verstellbaren Planetengetriebes 10 angeordnet. Insbesondere kann der elektrische Antrieb 3 über dem stufenlos verstellbaren Planetengetriebe 10 angeordnet werden, sodass eine möglichst hohe Bodenfreiheit im Bereich des Kurbeltriebs 2 vorhanden ist. Das zentrale Stellorgan 14 (Sonnenrad) des stufenlos verstellbaren Planetengetriebes ist frei gelagert. Eine erste Stirnradverzahnung 16 mit Zahnrädern 51, 52 ist ferner vorgesehen, wobei der elektrische Antrieb 3 mit dem Zahnrad 52 und die Kurbelwelle 2 mit dem Zahnrad 51 verbunden ist. Das Zahnrad 51 ist seinerseits mit dem Eingangselement 11 des stufenlos verstellbaren Planetengetriebes verbunden.

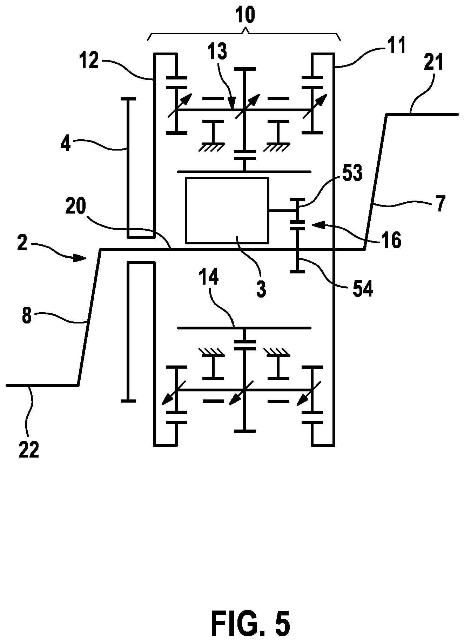

Figur 5 zeigt ein viertes Ausführungsbeispiel der Erfindung, bei dem der elektrische Antrieb 3 innerhalb des stufenlos verstellbaren Planetengetriebes 10 angeordnet ist. Der elektrische Antrieb 3 ist dabei über eine Stirnradverzahnung 16 mit Zahnrädern 53, 54 mit der Kurbelwelle 20 verbunden. Die Kurbelwelle 20 ist über das Eingangselement 11 mit dem stufenlos verstellbaren Planetengetriebe 10 verbunden. Der elektrische Antrieb 3 kann dabei oberhalb der Kurbelwelle 20 angeordnet sein. Es ist jedoch auch möglich, den elektrischen Antrieb 3 in jeder Winkelposition anzuordnen.

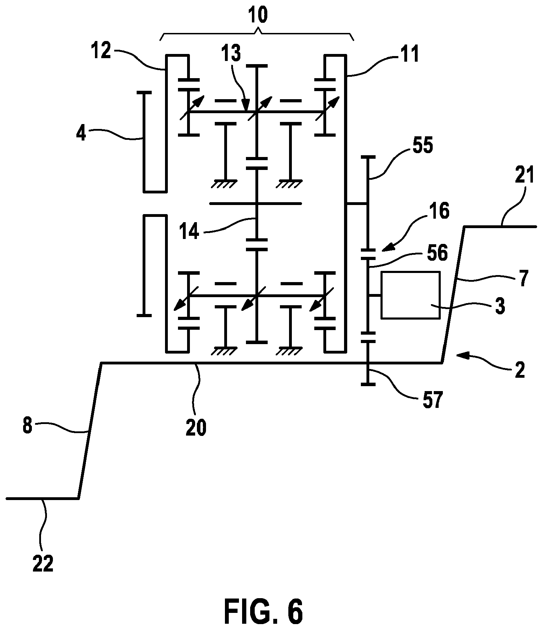

Figur 6 zeigt eine bevorzugte Ausführungsform gemäß einem fünften Ausführungsbeispiel der Erfindung. Bei diesem Ausführungsbeispiel ist eine nicht koaxiale Anordnung der Kurbelwelle 20 und des Kettenblatts 4 vorhanden. Eine Mittelachse des Kettenblatts 4 ist parallel zur Kurbelwelle 20. Eine Verbindung von der Kurbelwelle 20 zum stufenlos verstellbaren Planetengetriebe 10, welches zwischen der Kurbelwelle 20 und dem Kettenblatt 4 geschaltet ist, erfolgt über mehrere Stirnradstufen 16 mit Zahnrädern 55, 56, 57. Der elektrische Antrieb 3 treibt dabei das mittlere Zahnrad 56 an. Das Zahnrad 57 ist auf der Kurbelwelle 20 angeordnet und kämmt mit dem Zahnrad 56. Das Zahnrad 55 ist mit dem Eingangselement 11 des stufenlos verstellbaren Planetengetriebes 10 verbunden. Das zentrale Stellorgan 14 ist frei drehbar gelagert. Bei diesem Ausführungsbeispiel kann der elektrische Antrieb 3 auch an anderen Positionen angeordnet werden, beispielsweise auf der Kurbelwelle 20 oder am Zahnrad 55. Auch können beispielsweise der elektrische Antrieb 3 und die Kurbelwelle 20 ihre Position tauschen, sodass der elektrische Antrieb 3 mit Zahnrad 57 und die Kurbelwelle 20 mit Zahnrad 56 verbunden ist. Gemäß Drehzahl des elektrischen Antriebs 3 und zu überbrückender Distanz zwischen Kurbelwelle 20 und Eingangselement 11 können beliebig viele Stirnradstufen für die Verbindung von der Kurbelwelle 20 zum stufenlos verstellbaren Planetengetriebe 10 eingesetzt werden. Ebenso kann der elektrische Antrieb 3 über eine weitere Stirnradstufe oberhalb von Zahnrad 55 und ohne Verbindung zu Zahnrad 56 angeordnet werden.

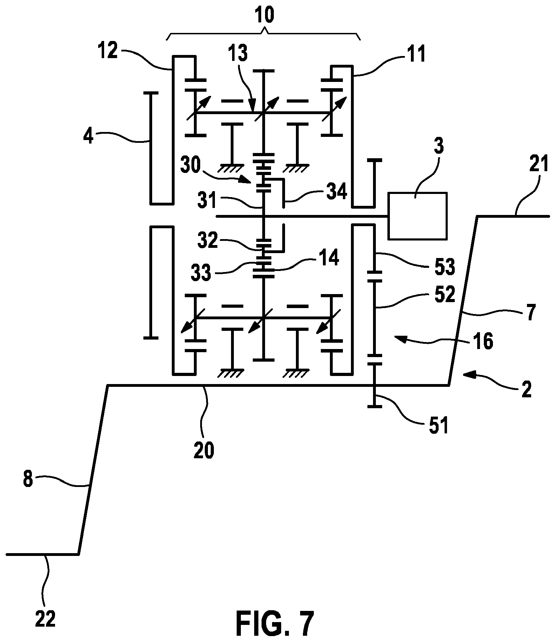

Figur 7 zeigt ein sechstes bevorzugtes Ausführungsbeispiel der Erfindung. Bei diesem Ausführungsbeispiel ist der elektrische Antrieb 3 koaxial zur Mittelachse von Kettenblatt 4 und zur Mittelachse des stufenlos verstellbaren Planetengetriebes 10 angeordnet und über ein zusätzliches konventionelles Planetengetriebe 30 mit dem stufenlos verstellbaren Planetengetriebe 10 verbunden. Dabei ist ein Ausgang (Hohlrad 33) des konventionellen Planetengetriebes 30 mit dem zentralen Stellorgan 14 bzw. dem Sonnenrad des stufenlos verstellbaren Planetengetriebes 10 verbunden. Das Sonnenrad bzw. zentrale Stellorgan 14 des stufenlos verstellbaren Planetengetriebes 10 ist als Hohlrad 33 für das konventionelle Planetengetriebe 30 ausgeführt. Somit ist das konventionelle Planetengetriebe 30 innerhalb des zentralen Stellorgans 14 (Sonnenrad) angeordnet. Die Kurbelwelle 20 und die Mittelachse des Kettenblatts 4 sind wieder nicht koaxial, aber parallel versetzt zu einander angeordnet. Bei dieser Anordnung kann insbesondere eine hohe Bodenfreiheit am Kurbeltrieb erreicht werden, da der elektrische Antrieb 3 und die Gangschaltung oberhalb der Kurbelwelle 20 angeordnet sind.

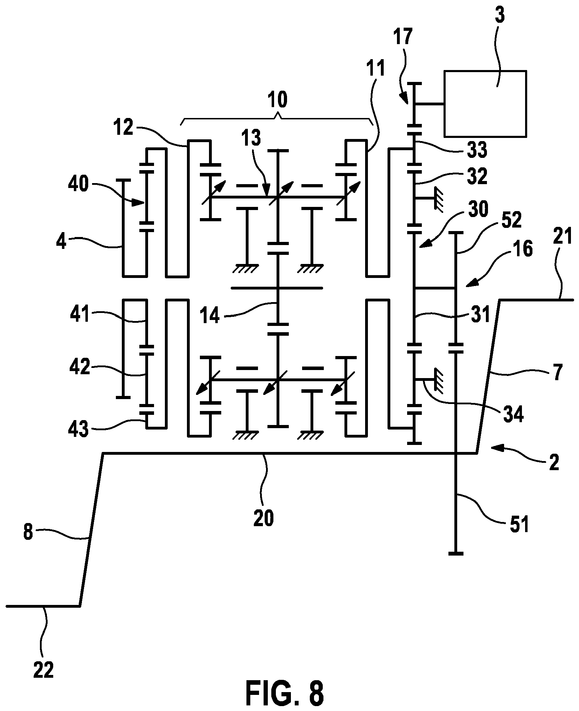

Figur 8 zeigt ein siebtes bevorzugtes Ausführungsbeispiel der Erfindung. Das siebte Ausführungsbeispiel weist dabei ein erstes konventionelles Planetengetriebe 30, ein zweites konventionelles Planetengetriebe 40 und das stufenlos verstellbare Planetengetriebe 10 auf. Das erste konventionelle Planetengetriebe 30 ist dabei am Eingang zum stufenlos verstellbaren Planetengetriebe 10 angeordnet. Das zweite konventionelle Planetengetriebe 40 mit Sonnenrad 41, Planeten 42 und Hohlrad 43, ist am Ausgang des stufenlos verstellbaren Planetengetriebes 10 angeordnet. Das zweite konventionelle Planetengetriebe 40 ist über dessen Sonnenrad 41 mit dem Kettenblatt 4 verbunden. Das Sonnenrad 31 des ersten konventionellen Planetengetriebes 30 ist über eine Stirnradverzahnung 16 mit Zahnrädern 51, 52 mit der Kurbelwelle 20 verbunden. Der elektrische Antrieb 3 ist mit dem Hohlrad 33 des ersten konventionellen Planetengetriebes 30 über eine zweite Stirnradverzahnung 17 verbunden. Die Mittelachse des Kettenblatts 4 ist wiederum parallel versetzt zur Kurbelwelle 20. Auch dieses Ausführungsbeispiel weist einen sehr kompakten Aufbau auf. Durch das erste konventionelle Planetengetriebe 30 in Kombination mit dem Stirnradgetriebe 16 kann die Eingangsdrehzahl für das stufenlos verstellbare Planetengetriebe 10 vorteilhaft erhöht und das Eingangsmoment vorteilhaft erniedrigt werden. Daraus ergibt sich eine kompaktere Auslegung für das stufenlos verstellbare Planetengetriebe 10. Eine damit zu hohe Drehzahl am Ausgang des stufenlos verstellbaren Planetengetriebes 10 für das Kettenblatt 4 wird durch das zweite konventionelle Planetengetriebe 40 wieder geeignet reduziert.

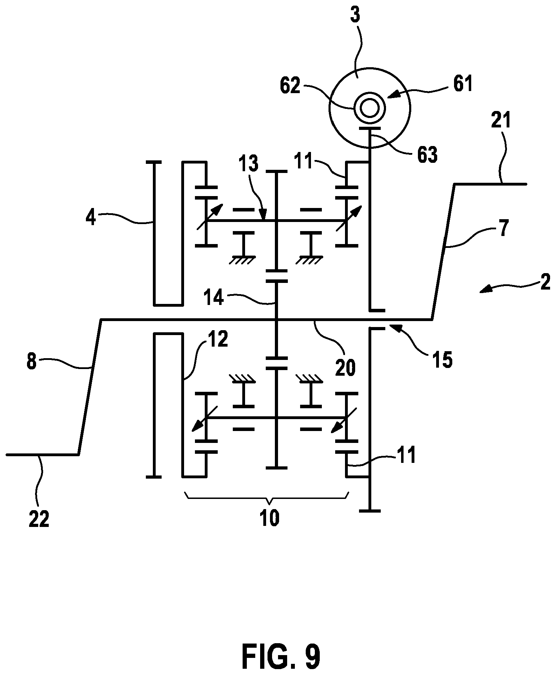

Figur 9 zeigt ein achtes Ausführungsbeispiel der Erfindung. Beim achten Ausführungsbeispiel ist der elektrische Antrieb 3 um 90° gedreht zur Kurbelwelle 20 angeordnet. Dabei ist ein Schneckengetriebe 61 mit Schnecke 62 und Schneckenrad 63 vorgesehen, welches ein Eingangselement 11 für das stufenlos verstellbare Planetengetriebe 10 mit dem elektrischen Antrieb 3 verbindet. Hierbei ist insbesondere die geringe Geräuschentwicklung von Schneckengetrieben gegenüber Stirnradgetrieben oder Planetengetrieben vorteilhaft. Aufgrund einer möglichen hohen Übersetzung des Schneckengetriebes 61 in einer Stufe kann ein besonders kompakter Motor mit hoher Drehzahl und geringem Moment eingesetzt werden. Der elektrische Antrieb 3 kann über den Umfang des Schneckenrades prinzipiell jede beliebige Winkelposition um die Kurbelwelle 20 herum einnehmen.

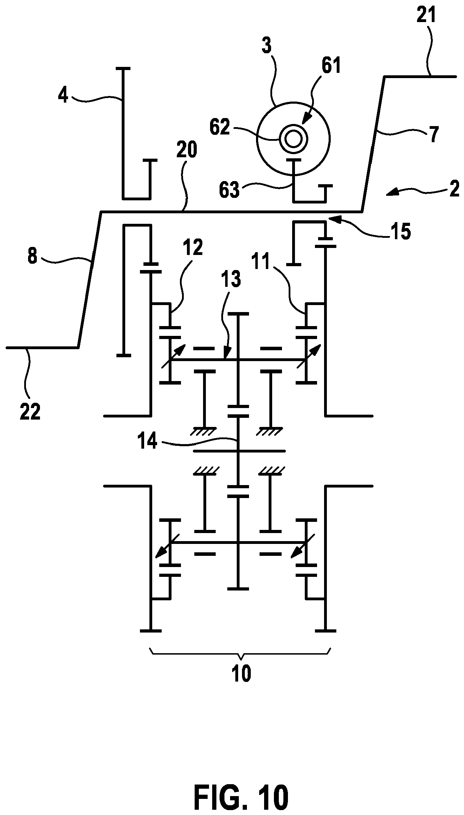

Figur 10 zeigt ein neuntes bevorzugtes Ausführungsbeispiel der Erfindung. Der Kurbeltrieb 2 des neunten Ausführungsbeispiels entspricht im Wesentlichen dem des achten Ausführungsbeispiels, wobei zusätzlich sowohl zwischen Schneckengetriebe 61 und Eingangselement 11 für das stufenlos verstellbare Planetengetriebe 10 als auch zwischen Ausgangselement 12 für das stufenlos verstellbare Planetengetriebe 10 und Kettenblatt 4 jeweils noch eine Stirnradstufe vorgesehen ist. Dies hat den Vorteil, dass für einen besonders kompakten Aufbau der elektrische Antrieb 3 entlang der Kurbelwelle 20 mittig angeordnet werden kann. Bei diesem Ausführungsbeispiel ist eine nicht koaxiale Anordnung der Kurbelwelle 20 und des stufenlos verstellbaren Planetengetriebes 10 vorhanden. Der elektrische Antrieb 3 und das stufenlos verstellbare Planetengetriebe 10 können in dieser Ausführung nahezu beliebige Winkel zueinander um die Kurbelwelle 20 herum einnehmen.

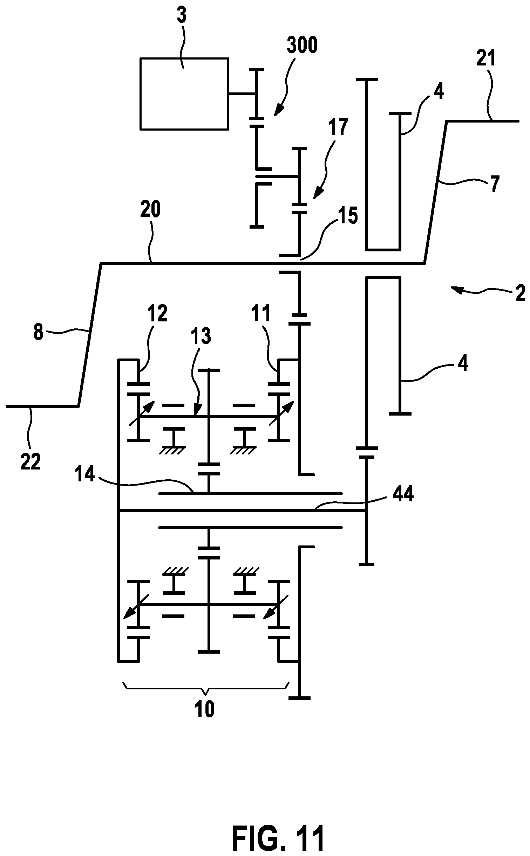

Figur 11 zeigt ein zehntes Ausführungsbeispiel der Erfindung. Beim zehnten Ausführungsbeispiel ist ein Ausgangselement 12 für das stufenlos verstellbare Planetengetriebe 10 über eine zentrale Welle 44 des stufenlos verstellbaren Planetengetriebes 10 mit dem Kettenblatt 4 auf der Seite des Eingangselements 11 für das stufenlos verstellbare Planetengetriebe 10 verbunden. An- und Abtrieb des stufenlos verstellbaren Planetengetriebes 10 befinden sich damit auf derselben Seite. Das stufenlos verstellbare Planetengetriebe 10 ist wieder nicht koaxial zur Kurbelwelle 20 angeordnet. Zu diesem Zweck befindet sich zwischen dem Kettenblatt 4 und dem stufenlos verstellbaren Planetengetriebe 10 eine weitere Stirnradstufe, die die Ausgangswelle des stufenlos verstellbaren Planetengetriebes 10 mit dem Kettenblatt 4 verbindet. Insbesondere in diesem Ausführungsbeispiel kann die weitere Stirnradstufe zur Verbindung der Ausgangswelle des stufenlos verstellbaren Planetengetriebes 10 mit dem Kettenblatt 4 alternativ auch durch einen nicht erfindungsgemäßen Riementrieb ersetzt werden. Vorteil eines Riementriebs ist die geringe Geräuschabstrahlung und der hohe Wirkungsgrad.

## Patentansprüche

1. Mit Motorkraft und/oder Pedalkraft antreibbares Fahrzeug, insbesondere Elektrofahrrad, umfassend
- einen Kurbeltrieb (2) mit Kurbelwelle (20),
- ein Abtriebselement, das ein Kettenblatt (4) ist, welches ein Antriebsmoment für das Fahrzeug abgibt,
- einen elektrischen Antrieb (3) mit Reduktionsgetriebe, und
- ein stufenlos verstellbares Planetengetriebe (10),
- wobei ein Ausgangselement (12) des stufenlos verstellbaren Planetengetriebes das Antriebsmoment auf das Abtriebselement überträgt,
**dadurch gekennzeichnet, dass**
- ein Eingangselement (11) des stufenlos verstellbaren Planetengetriebes (10) mit dem Kurbeltrieb (2) und dem elektrischen Antrieb (3) verbunden ist, wobei ein durch einen Fahrer aufgebrachtes Pedalantriebsmoment und ein durch den elektrischen Antrieb (3) aufgebrachtes elektrisches Antriebsdrehmoment über das gleiche Eingangselement (11) des stufenlos verstellbaren Planetengetriebes (10) eingebracht werden, so dass die Summation der beiden Drehmomente vor dem stufenlos verstellbaren Planetengetriebe erfolgt.

2. Fahrzeug nach Anspruch 1, **dadurch gekennzeichnet, dass** dem stufenlos verstellbaren Planetengetriebe (10) ein Getriebe, insbesondere ein Stirnradgetriebe (16) oder ein Planetengetriebe (30) oder ein Schneckengetriebe (61), vorgeschaltet ist.

3. Fahrzeug nach einem der vorhergehenden Ansprüche, **dadurch gekennzeichnet, dass** der elektrische Antrieb (3) dem stufenlos verstellbaren Planetengetriebe (10) an der Kurbelwelle (20) um einen beliebigen Winkel, vorzugsweise um 180°, gegenüberliegt.

4. Fahrzeug nach einem der Ansprüche 1 oder 2, **dadurch gekennzeichnet, dass** der elektrische Antrieb (3) und das stufenlos verstellbare Planetengetriebe (10) an einer gemeinsamen Seite der Kurbelwelle (20) angeordnet sind.

5. Fahrzeug nach einem der vorhergehenden Ansprüche, **dadurch gekennzeichnet, dass** der elektrische Antrieb (3) radial innerhalb oder radial außerhalb des stufenlos verstellbaren Planetengetriebes (10) angeordnet ist.

6. Fahrzeug nach einem der vorhergehenden Ansprüche, **dadurch gekennzeichnet, dass** die Kurbelwelle (20) und eine Mittelachse des Abtriebselements auseinanderfallen und insbesondere parallel zueinander sind.

7. Fahrzeug nach einem der vorhergehenden Ansprüche, **dadurch gekennzeichnet, dass** der elektrische Antrieb (3) mit einem konventionellen Planetengetriebe (30) verbunden ist, wobei ein Abtrieb des konventionellen Planetengetriebes (30) mit dem stufenlos verstellbaren Planetengetriebe (10), insbesondere dem zentralen Stellorgan oder dem Sonnenrad (40), verbunden ist.

8. Fahrzeug nach einem der vorhergehenden Ansprüche, **dadurch gekennzeichnet, dass** das Abtriebselement auf einer die Kurbelwelle (20) umschließenden Hohlwelle frei drehbar gelagert angeordnet ist.

9. Fahrzeug nach einem der vorhergehenden Ansprüche, **dadurch gekennzeichnet, dass** das Abtriebselement auf der Seite des Eingangselements (11) des stufenlos verstellbaren Planetengetriebes (10) angeordnet ist.

## Claims

1. Vehicle which can be driven using motor force and/or pedal force, in particular electric bicycle, comprising
- a crank drive (2) with a crank shaft (20),
- an output drive element which is a chain ring (4) which outputs a drive torque for the vehicle,
- an electric drive (3) with a reduction gear mechanism, and
- a continuously variable planetary gear mechanism (10),
- wherein an output element (12) of the continuously variable planetary gear mechanism transmits the drive torque to the output drive element,
**characterized in that**
- an input element (11) of the continuously variable planetary gear mechanism (10) is connected to the crank drive (2) and the electric drive (3), wherein a pedal drive torque which is applied by a rider and an electric drive torque which is applied by the electric drive (3) are introduced by means of the same input element (11) of the continuously variable planetary gear mechanism (10), so that the two torques are summed upstream of the continuously variable planetary gear mechanism.

2. Vehicle according to Claim 1, **characterized in that** a gear mechanism, in particular a spur gear mechanism (16) or a planetary gear mechanism (30) or a worm gear mechanism (61), is connected upstream of the continuously variable planetary gear mechanism (10).

3. Vehicle according to either of the preceding claims, **characterized in that** the electric drive (3) is situated opposite the continuously variable planetary gear mechanism (10) on the crank shaft (20) through any desired angle, preferably through 180°.

4. Vehicle according to either of Claims 1 and 2, **characterized in that** the electric drive (3) and the continuously variable planetary gear mechanism (10) are arranged on a common side of the crank shaft (20).

5. Vehicle according to one of the preceding claims, **characterized in that** the electric drive (3) is arranged radially inside or radially outside the continuously variable planetary gear mechanism (10).

6. Vehicle according to one of the preceding claims, **characterized in that** the crank shaft (20) and a centre axis of the output drive element come apart and, in particular, are parallel to one another.

7. Vehicle according to one of the preceding claims, **characterized in that** the electric drive (3) is connected to a conventional planetary gear mechanism (30), wherein an output drive of the conventional planetary gear mechanism (30) is connected to the continuously variable planetary gear mechanism (10), in particular to the central actuating element or to the sun gear (40).

8. Vehicle according to one of the preceding claims, **characterized in that** the output drive element is arranged such that it is mounted in a freely rotatable manner on a hollow shaft which surrounds the crank shaft (20) .

9. Vehicle according to one of the preceding claims, **characterized in that** the output drive element is arranged on the side of the input element (11) of the continuously variable planetary gear mechanism (10).

## Revendications

1. Véhicule pouvant être propulsé par la force d'un moteur et/ou la force de pédales, notamment bicyclette électrique, comprenant
- une transmission à manivelle (2) pourvue d'un vilebrequin (20),
- un élément mené, qui est un plateau de pédalier (4), qui délivre un couple d'entraînement pour le véhicule,
- un mécanisme d'entraînement électrique (3) pourvu d'un engrenage réducteur et
- un engrenage planétaire (10) à réglage continu,
- un élément de sortie (12) de l'engrenage planétaire à réglage continu transmettant le couple d'entraînement à l'élément mené,
**caractérisé en ce que**
- un élément d'entrée (11) de l'engrenage planétaire (10) à réglage continu est relié à la transmission à manivelle (2) et au mécanisme d'entraînement électrique (3), un couple d'entraînement de pédale appliqué par un conducteur et un couple d'entraînement électrique appliqué par le mécanisme d'entraînement électrique (3) étant introduits par le biais du même élément d'entrée (11) de l'engrenage planétaire (10) à réglage continu, de sorte que l'addition des deux couples a lieu avant l'engrenage planétaire à réglage continu.

2. Véhicule selon la revendication 1, **caractérisé en ce qu'**un engrenage, notamment un engrenage droit (16) ou un engrenage planétaire (30) ou un engrenage à vis sans fin (61), est monté en amont de l'engrenage planétaire (10) à réglage continu.

3. Véhicule selon l'une des revendications précédentes, **caractérisé en ce que** le mécanisme d'entraînement électrique (3) se trouve à l'opposé de l'engrenage planétaire (10) à réglage continu sur le vilebrequin (20) d'un angle quelconque, de préférence de 180°.

4. Véhicule selon l'une des revendications 1 ou 2, **caractérisé en ce que** le mécanisme d'entraînement électrique (3) et l'engrenage planétaire (10) à réglage continu sont disposés sur un côté commun du vilebrequin (20) .

5. Véhicule selon l'une des revendications précédentes, **caractérisé en ce que** le mécanisme d'entraînement électrique (3) est disposé dans le sens radial à l'intérieur ou dans le sens radial à l'extérieur de l'engrenage planétaire (10) à réglage continu.

6. Véhicule selon l'une des revendications précédentes, **caractérisé en ce que** le vilebrequin (20) et un axe central de l'élément mené se séparent et sont notamment parallèles l'un à l'autre.

7. Véhicule selon l'une des revendications précédentes, **caractérisé en ce que** le mécanisme d'entraînement électrique (3) est relié à un engrenage planétaire (30) conventionnel, un élément mené de l'engrenage planétaire (30) conventionnel étant relié à l'engrenage planétaire (10) à réglage continu, notamment à l'organe de commande central ou à la roue solaire (40).

8. Véhicule selon l'une des revendications précédentes, **caractérisé en ce que** l'élément mené est disposé en étant monté en rotation libre sur un arbre creux qui entoure le vilebrequin (20).

9. Véhicule selon l'une des revendications précédentes, **caractérisé en ce que** l'élément mené est disposé sur le côté de l'élément d'entrée (11) de l'engrenage planétaire (10) à réglage continu.
